# EUROPEAN PATENT APPLICATION

(11) **EP 4 538 089 A1**
(43) Date of publication of application: **16.04.2025**
(21) Application number: 24205691.9
(22) Date of filing: 09.10.2024
(51) Int. Cl.: B60K 17/28, F16H 3/089, F16H 3/12, F16H 61/04, F16H 47/02

(54) **IMPROVED POWER-TAKE-OFF ASSEMBLY FOR A WORK VEHICLE, WORK VEHICLE PROVIDED WITH SUCH POWER-TAKE-OFF ASSEMBLY, AND RELATED CONTROL METHOD**

(30) Priority: 11.10.2023 IT 202300021159
(71) Applicant: CNH Industrial Italia S.p.A., 10156 Torino (IT)
(72) Inventor: Mantovani, Michele, 10156 Turin (IT); Tenneriello, Luigi, 10156 Turin (IT)
(74) Representative: CNH Industrial IP Department

(57) **Abstract**

There is described a power-take-off assembly (6) for a work vehicle (10), comprising: an input shaft (8), which is configured to be connected to the powertrain assembly (2); an output shaft (10), which is configured to be connected to a work implement carried by said power-take-off assembly (6); a power-take-off transmission (12), which is interposed between the input shaft (8) and the output shaft (10) and is configured to couple the input shaft (8) with the output shaft (10); and a motor assembly (24), which is carried by the output shaft (8) and is configured to provide torque to the said output shaft (8).

## Description

### TECHNICAL FIELD

The present invention relates to a power-take-off assembly for a work vehicle, in particular for an agricultural vehicle such as a tractor, and to its control method.

The present invention finds its preferred, although not exclusive, application in a hybrid power-take-off assembly for a tractor.

Reference will be made to this application by way of example below, without however losing in generality.

### BACKGROUND OF THE INVENTION

As is known, work vehicles such as agricultural vehicles are provided at least with one power-take-off assembly adapted to transmit mechanical power to work equipment or work implements towed or carried by the same work vehicle, such as mowers, balers, forage harvesters, spreaders or the like.

More in detail, such power-take-off assemblies usually comprise at least: an input shaft carried by an internal combustion engine or by a transmission of the work vehicle; an output shaft, which is adapted to be mechanically connected to the equipment or work implement towed or carried by the work vehicle, for instance by means of a universal joint shaft; and a power-take-off transmission, which is adapted to mechanically connect the input shaft with the output shaft.

Typically, the power-take-off transmission comprises at least two gears, each defining a different gear ratio between the input shaft and the output shaft, a clutch, and a selector mechanism, which allows the driver to engage all the gears through a lever mechanism.

Clearly, during a gear change, the clutch has first to be disengaged, in order to temporarily stop the torque transmission between the input shaft and the output shaft of the power-take-off assembly, and allow to swap between the two gears.

The provision of at least two gears allows to vary discretely the transmission ratio of the power-take-off transmission, i.e. to increase or decrease the angular speed of the internal combustion engine while maintaining a constant angular speed at the driven splined shaft.

This, in particular, allows the user to select a certain internal combustion engine angular speed depending on the particular operation to be carried out by the work implement connected to the power-take-off assembly, while maintaining a constant angular speed of the power-take-off output shaft.

Indeed, most of the time, the angular speed of the power-take-off output shaft is constrained to the work implement attached to the power-take-off assembly, for instance 540 rpm, 750 rpm, 1000 rpm or the like.

Unfortunately, the above-described power-take-off transmission does not allow to change gear under load and therefore, during a work operation with a particular work implement, the user cannot change gear without interrupting temporarily the power transmission to the same work implement.

Therefore, the user must select a gear and a resulting internal combustion engine angular speed in advance and then maintain such gear for the entire operation with the work implement. The gear and the resulting internal combustion engine angular speed must be selected considering the highest power requirement of the work implement, even if such power is requested only for a short time interval.

For instance, when operating a round baler, the power request of such implement is almost always quite low, i.e. lower than 30% of the internal combustion engine rated power, except from a small transient during which the bale is pushed to be ejected outside the baler. Indeed, in such transient, a power greater than the 50% of the internal combustion engine rated power is requested.

However, this transient lasts for just a few seconds, while the round baler takes more than a minute to collect up all the hay or the straw from the field and then make up the bale.

Unfortunately, the user must set a high internal combustion engine speed, for instance 1500 rpm, for the overall baling operation, in order to be able to accommodate the high-power request of the round baler during the bale ejecting phase.

This clearly, entails a considerable waste of fuel, as the internal combustion engine angular speed is always maintained high, while for most of the baling operation it could be lowered, for instance down to 1000 rpm.

In view of the above, the need is felt for an improvement in the control of a power-take-off assembly of a work vehicle, in particular to reduce the fuel consumption of the related work vehicle.

Aim of the present invention is to satisfy the above-mentioned needs in a cost effective and optimized manner.

### SUMMARY OF THE INVENTION

The aforementioned aims are reached by a power take off assembly and by a related control method as claimed in the appended set of claims.

### BRIEF DESCRIPTION OF DRAWINGS

For a better understanding of the present invention, a preferred embodiment is described in the following, by way of a non-limiting example, with reference to the attached drawings, wherein
- Figure 1 is schematic representations of a first embodiment of a work vehicle according to the present invention, with parts removed for clarity; and
- Figure 2 is schematic representations of a second embodiment of a work vehicle according to the present invention, with parts removed for clarity.

### DETAILED DESCRIPTION OF THE INVENTION

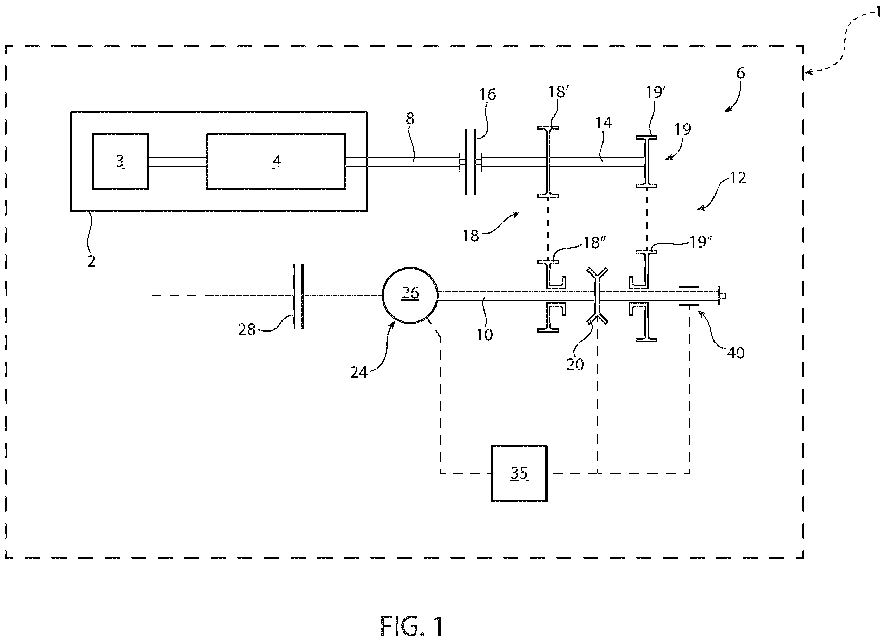

Figure 1 schematically represents a work vehicle, preferably an agricultural vehicle such as a tractor, denoted as a whole with reference number 1.

Work vehicle 1 comprises a powertrain assembly 2, which is carried by a work vehicle body (not illustrated) and is adapted to provide torque to allow motion of the vehicle body with respect to the ground, e.g. thanks to at least one pair of wheels or tracks (not illustrated).

In particular, powertrain assembly 2 may comprise an engine 3, such as an internal combustion engine, preferably a diesel-powered or a methane-powered internal combustion engine.

In addition, powertrain assembly 2 preferably comprises also a drivetrain assembly 4 or transmission assembly, which is operatively interposed between the engine 3 and at least one pair of ground-engaging wheels or tracks (not illustrated), in a manner per se known and therefore not further described.

Drivetrain assembly 4 has preferably a CVT configuration, such as a power-split or hydro-mechanical configuration.

Clearly, drivetrain assembly 4 may also comprise a powershift, a semi-powershift, or a manual shifted transmission.

According to the described embodiment, work vehicle 1 comprises at least one power-take-off assembly 6, in the following referred to as "PTO assembly", which is configured to be carried by the powertrain assembly 2 and is configured to transmit mechanical power from the powertrain assembly 2 to work equipment or work implements towed or carried by work vehicle 1.

More in detail, power-take-off-assembly 6 may be carried by an engine 3 output shaft, such as an engine crankshaft, and /or by an output shaft of drivetrain assembly 4, in a manner per se known and therefore not further described.

With reference to the example shown in Figure 1, in particular, PTO assembly 6 comprises an input shaft 8 carried by the powertrain assembly 2.

In particular, input shaft 8 may be carried by the engine 3 or by the drivetrain assembly 4.

In addition, PTO assembly 6 further comprises an output shaft 10 adapted to be mechanically connected to the work implement towed or carried by work vehicle 1, to transmit torque to this latter.

Output shaft 10 is adapted to be connected to input shaft 8 in order to be driven in rotation.

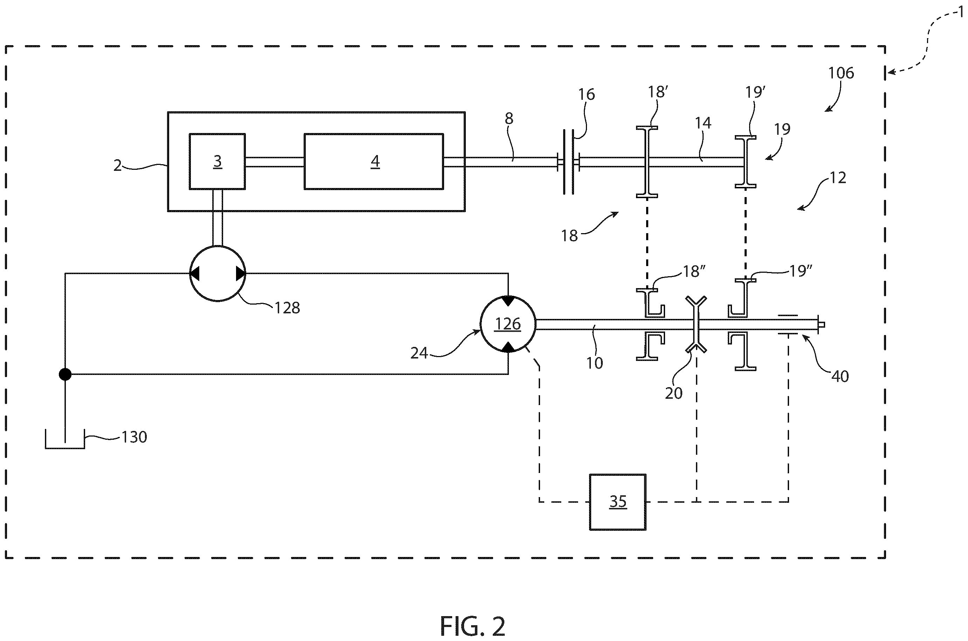

In particular, with reference to the exemplary embodiment illustrated in Figure 1 and 2, PTO assembly 6 further comprises a transmission 12, in the following referred to as "PTO transmission", which is operatively interposed between input shaft 8 and output shaft 10, and is adapted to mechanically connect input shaft 8 with output shaft 10.

More in detail, PTO transmission 12 comprises an intermediate shaft 14 selectively connectable to input shaft 8 and a clutch 16, in the following referred to also as "PTO clutch", which is operatively interposed between input shaft 8 and intermediate shaft 14, and is operable to selectively engage intermediate shaft 14 with input shaft 8, in order to transmit mechanical power from powertrain assembly 2 to intermediate shaft 12.

In addition, PTO transmission 12 preferably comprises a clutch actuator, in particular an electronically controlled actuator, which is configured to operate PTO clutch 16, as per se known and therefore not further described.

With reference to the exemplary embodiment illustrated in Figure 1, PTO transmission 12 further comprises a plurality of different gears, which are configured to mechanically connect intermediate shaft 14 with output shaft 10 and are configured to define different transmission ratios.

With reference to the exemplary embodiment illustrated in Figure 1 and 2, in particular, PTO transmission comprises a first gear 18 and a second gear 19 defining different transmission ratios.

The transmission ratio of PTO transmission 12 may be calculated as the ratio between the angular speed of input shaft 8 divided by the angular speed of output shaft 10

For instance, gear 18 may define a greater transmission ratio with respect to gear 19.

Gear 18, in particular, includes a first toothed wheel 18^{I} carried by intermediate shaft 14, and a second toothed wheel 18^{II} carried by output shaft 10 and meshing with first toothed wheel 18^{I}.

A first between toothed wheels 18^{I} and 18^{II} is carried in a fixed manner by a first one between intermediate shaft 14 and output shaft 10, while the second one between toothed wheels 18^{I} and 18^{II} is carried in a free rotatable manner by the second one between intermediate shaft 14 and output shaft 10.

More in detail, toothed wheel 18^{I} is preferably carried in a fixed manner by intermediate shaft 14, while toothed wheel 18^{II} is preferably carried in a free rotatable manner by output shaft 10.

With reference to the exemplary embodiment illustrated in Figure 1 and 2, in addition, gear 19 includes a first toothed wheel 19^{I} carried by intermediate shaft 14, and a second toothed wheel 19^{II} carried by output shaft 10 and meshing with first toothed wheel 19^{I}.

A first between toothed wheels 19^{I} and 19^{II} is carried in a fixed manner by the first one between intermediate shaft 14 and output shaft 10, while the second one between toothed wheels 19^{I} and 19^{II} is carried in a free rotatable manner by the second one between intermediate shaft 14 and output shaft 10.

More in detail, toothed wheel 19^{I} is preferably carried in a fixed manner by intermediate shaft 14, while toothed wheel 19^{II} is preferably carried in a free rotatable manner by output shaft 10.

With reference to the exemplary embodiment illustrated in Figure 1 and 2, PTO transmission further comprises a selection element 20, e.g. a semi-synchronizer or a dog clutch, which is carried the second one between intermediate shaft 14 and output shaft 10 and is configured to selectively engage the second one between toothed wheels 18^{I} and 18^{II} or the second one between toothed wheels 19^{I} and 19^{II} with the second one between intermediate shaft 14 and output shaft 10.

More in detail, selection element 20 is preferably carried by output shaft 10 and is preferably configured to selectively engage toothed wheel 18^{II} or toothed wheel 19^{II} with output shaft 10.

PTO assembly 6 further comprises a motor assembly 24, which is carried by the second between said intermediate shaft 14 and said output shaft 10 and is configured to apply a torque on the latter.

More in detail, the motor assembly 24 is preferably carried by the output shaft 10 and is configured to apply torque on the latter.

Motor assembly 24 is separate and distinct from powertrain assembly 2, i.e. from engine 3 and drivetrain assembly 4.

With reference to the exemplary embodiment illustrated in Figure 1, motor assembly 24 preferably comprises an electric machine 26, configured to operate as an electric motor to apply torque to the output shaft 26.

In addition, motor assembly 24 further comprises an electric energy storage system 28, in the following referred to as "accumulator means", which is configured to be electrically connected to the electric machine 26 and is configured to store the electric energy to power electric machine 26.

Electric machine 26, in addition, is configured to operate as an electric generator when driven in rotation by the respective shaft, in particular by output shaft 10, in order to generate electric energy to charge the accumulator means 28.

With reference to the preferred embodiment illustrated in Figure 1, accumulator means 28 preferably comprise a supercapacitor 30.

Alternatively, accumulator means 28 may comprise a battery, such as a lithium-ion based battery.

In addition, work vehicle 1 preferably further comprises an electronic control unit 35, which is configured to be electrically connected at least to the aforementioned actuator of PTO clutch 16, to selection element 20, to motor assembly 26 and to powertrain assembly 2 and comprises elaboration means configured to control their operation according to the control logic described more in detail in the following.

Electronic control unit 35 can be either the ECU of the work vehicle 1 or the ECU of the drivetrain assembly 4 or it may be separate and distinct from the aforementioned ECUs. The electronic control unit 35 is configured to control the above cited elements of the transmission 1 in an automatic way following a control logic, which can be deployed into a specific software code downloadable into the same electronic control unit 35, and is configured to execute the control method as described in the following.

In addition, with reference to the exemplary embodiment illustrated in figure 1, PTO assembly 6 preferably further comprises sensing means 40, in particular a torque sensor, which are operatively connected to the output shaft 10 and are configured to measure/detect the torque exerted by the same output shaft 10 on the work equipment or work implement connected to PTO assembly 6.

Electronic control unit 35 is preferably electronically connected to sensor means 40 to retrieve data therefrom and is configured to control the operation of at least the actuator of PTO clutch 16, the selection element 20, the motor assembly 26 and the powertrain assembly 2 based on the data provided by such sensor means 40.

The operation of the above-described PTO assembly 6 is the following.

Suppose that in an initial condition, the angular speed of the output shaft 10 is constant and the power request at the PTO assembly 6 is below a given threshold, for instance it does not exceed the 30% of the maximum rated power of engine 3.

In such operating conditions, the PTO clutch 16 is engaged and the selection element 20 is operated to select the gear, between gear 18 and gear 19, with the lowest transmission ratio, in order to maintain the engine angular speed 3 at a first angular speed, which is advantageously as low as possible to reduce fuel consumption while still allowing to provide at output enough torque.

Then, suppose that the power request at the PTO assembly 6 increases above said threshold, for instance because the work equipment or the work implement connected to the same PTO assembly 6 temporarily absorbs more mechanical power, the electronic control unit 35 controls the components of PTO assembly 6 to shift from gear 18 to gear 19 or vice-versa, in order to be able to increase the angular speed of engine 3 and therefore to be able to provide at output more power, while maintaining the output shaft 10 angular speed constant.

In particular, the above operation advantageously allows to bring the engine 3 in a working area wherein it is able to provide at output enough torque to meet the power requirement at the work implement connected to power take off assembly 6.

More in detail, the shifting between gear 18 to gear 19 comprises to disengage PTO clutch 16, to operate selection element 20 to disengage gear 18 and engage gear 19, or vice-versa, and then to engage PTO clutch 16 again.

In addition, in order to maintain the angular speed of output shaft 10 constant, the angular speed of engine 3 is simultaneously increased from said first angular speed to a second angular speed greater that the first, to compensate for the variation of the transmission ratio of PTO transmission 16.

At the same time, to avoid in interruptions of torque transmission during the during the gear shift between gear 18 and gear 19, electronic control unit 35 controls motor assembly 26, in order to apply a torque on output shaft 10.

This allows to shift between gear 18 and gear 19 and at the same time provide torque to the work equipment or work implement connected to the PTO assembly 6 substantially seamlessly.

In order to avoid jerks or oscillation on work vehicle 1, in addition, during the gear shift within the PTO transmission 16, the drivetrain assembly 4 is operated to change its transmission ratio in order to compensate for the variation of the engine 3 angular speed.

In particular, during the shift between gear 18 and gear 19, while progressively disengaging PTO clutch 16, the torque provided by motor assembly 26 is progressively increased, until PTO clutch 16 is completely disengaged and all the torque is provided by motor assembly 26.

Then, once selector element 20 has completed shifting between gears 18 and 19, PTO clutch 16 is progressively engaged and the torque provided by motor assembly 26 is progressively reduced, until PTO clutch 16 is completely engaged and the torque provided at output by motor assembly 26 is zero.

More in detail, during such gear shift, motor assembly 26 is controlled so that the torque provided to output shaft 10 is not interrupted.

In even more detail, during such gear shift, motor assembly 26 is controlled so that the torque provided to output shaft 10 varies seamlessly and without jerks between a first value when gear 18 is engaged and the engine 3 is running with its first angular speed and a second value when gear 19 is engaged and engine 3 is running with its second angular speed.

The above operation is advantageously repeated also when the power absorbed by the work equipment or work implement connected to PTO assembly 6 drops below said threshold, preferably after a predetermined hysteresis cycle, and the engine 3 angular speed can be reduced.

According to the above operation, the present invention is further directed to a method for controlling the operation of power-take-off assembly 1 as described above and comprising the following phases:
i) measuring the torque transmitted by output shaft 10 to the work implement connected to power-take-off assembly 6;
ii) determining if the torque measured in step i) exceeds a first threshold;
iii) if the torque measured in step i) exceeds the first threshold, disengaging PTO clutch 16 and controlling motor assembly 26 to increase the torque provided to output shaft 10, in order to avoid interruption of the torque transmitted to output shaft 10;
iv) controlling selection element 20 to shift from one between first gear 18 and second gear 19 to the other one between first gear 18 and second gear 19, in order to increase the transmission ratio of PTO transmission 12, and
v) engaging PTO clutch 16 and controlling motor assembly 26 to decrease the torque provided to output shaft 10.

In addition, the method preferably comprises, after step iv), the step of increasing the angular speed of engine 3 in order to maintain constant the output speed of output shaft 10.

Preferably, the method further comprises the step of controlling the transmission ratio of drivetrain assembly 4, so as to accommodate the increase in the angular speed of engine 3 while maintain the traveling speed of work vehicle 1 constant.

In addition, the present invention is further directed to a method for controlling the operation of power-take-off assembly 1 as described above and comprising the following phases:
vi) measuring the torque transmitted by output shaft 10 to the work implement connected to power-take-off assembly 6;
vii) determining if the torque measured in step i) falls below a second threshold;
viii) if the torque measured in step i) falls below the second threshold, disengaging PTO clutch 16 and controlling motor assembly 26 to increase the torque provided to output shaft 10, in order to avoid interruption of the torque transmitted to output shaft 10;
ix) controlling selection element 20 to shift from one between first gear 18 and second gear 19 to the other one between first gear 18 and second gear 19, in order to decrease the transmission ratio of PTO transmission 12, and
x) engaging PTO clutch 16 and controlling motor assembly 26 to decrease the torque provided to output shaft 10.

Preferably, the second threshold is lower or equal than the first threshold. In particular, the first and the second threshold may be comprised within 30% to 50% of the rated power of engine 3.

In addition, the method preferably comprises, after step ix), the step of decreasing the angular speed of engine 3 in order to maintain constant the output speed of output shaft 10.

Preferably, the method further comprises the step of controlling the transmission ratio of drivetrain assembly 4, so as to accommodate the decrease in the angular speed of engine 3 while maintain the traveling speed of work vehicle 1 constant.

In view of the foregoing, the advantages of a power-take-off assembly, a related work vehicle and a related control method according to the present invention are considerable and apparent.

In particular, according to the proposed embodiment, the power-take-off assembly 1 allows to dynamically adapt the engine 3 angular speed to the actual working conditions experienced by power-take-off assembly 6. This in particular allows to reduce the engine 3 angular speed when the power request of the work implement connected to the power-take-off assembly 6 is low, and to increase the engine 3 angular speed when the power request of the work implement connected to the power-take-off assembly 6 is high, with all the benefits that this entails. Indeed, the possibility to dynamically adapt the engine 3 angular speed to the actual working conditions experienced by power-take-off assembly 6 allows to greatly reduce the fuel consumption of work vehicle 1, in addition to the noise and the vibrations experienced by the work vehicle user.

It is clear that modifications can be made to the described power-take-off assembly, work vehicle and method which do not extend beyond the scope of protection defined by the claims.

For example, the provided power-take-off transmission may comprise a different number of gears.

Moreover, further shafts or clutches may be present.

In addition, Figure 2 shows an alternative embodiment of the power-take-off assembly 106, which is similar to the power-take-off assembly 6 and whose corresponding parts will be denoted with the same reference numbers as power-take-off assembly 6.

Power-take-off assembly 106 distinguishes from power-take-off assembly 6 in that motor assembly 24 comprises an hydraulic machine 126, which is carried by output shaft 10 and is configured to provide torque to the latter.

More in detail, hydraulic machine 126 comprises a hydraulic motor 126, which is preferably fluidly connected to a hydraulic pump 128 of work vehicle 1 to receive pressurized fluid therefrom in order to be driven in rotation.

Hydraulic pump 128, in particular, may be carried by engine 3 and may be configured to suck fluid from a tank 130 and to provide to hydraulic motor 126 a pressurized flow of such hydraulic fluid.

## Claims

1. A power-take-off assembly (6, 106) for a work vehicle (10),
said power-take-off assembly (6, 106) being configured to be connected to a powertrain assembly (2) of said work vehicle (1) for transmitting torque to a work implement towed or carried by said work vehicle (1);
said power-take-off assembly (6, 106) comprising:
• an input shaft (8), which is configured to be connected to said powertrain assembly (2);
• an output shaft (10), which is configured to be connected to said work implement; and
• a power-take-off transmission (12), which is interposed between said input shaft (8) and said output shaft (10) and is configured to couple said input shaft (8) with said output shaft (10);
said power-take-off transmission (12) comprising:
• an intermediate shaft (14), which is configured to be selectively connected to said input shaft (8);
• a clutch (16), which is interposed between said input shaft (8) and said intermediate shaft (14) and is configured to selectively connect said intermediate shaft (14) with said input shaft (8); and
• a first gear (18), which is configured to connect said intermediate shaft (14) with said output shaft (10), and comprises a first toothed wheel (18^{I}) carried in a fixed manner by a first between said intermediate shaft (14) and said output shaft (8) and a second toothed wheel (18^{II}) carried in a free rotatable manner by the second between said intermediate shaft (14) and said output shaft (8) and meshing with said first toothed wheel (18^{I});
• a second gear (19), which is configured to connect said intermediate shaft (14) with said output shaft (10), and comprises a third toothed wheel (19^{I}) carried in a fixed manner by the first between said intermediate shaft (14) and said output shaft (8) and a fourth toothed wheel (19^{II}) carried in a free rotatable manner by the second between said intermediate shaft (14) and said output shaft (8) and meshing with said third toothed wheel (19^{I}); and
• a selection element (20), which is carried by the second between said intermediate shaft (14) and said output shaft (8) and is configured to selectively engage said second toothed wheel (18^{II}) or said fourth toothed wheel (19^{II}) with the second between said intermediate shaft (14) and said output shaft (8);
said power-take-off assembly (6, 106) further comprising a motor assembly (24), which is carried by the second between said intermediate shaft (14) and said output shaft (8) and is configured to provide torque to the second between said intermediate shaft (14) and said output shaft (8).

2. Power-take-off assembly according to claim 1, wherein said motor assembly (24) comprises an electric machine (26) mechanically connected to the second between said intermediate shaft (14) and said output shaft (8).

3. Power-off-assembly according to claim 2, further comprising an electric energy storage system (28), which is electrically connected to said electric machine (24) and is configured to store the electric energy to power said electric machine (26).

4. Power-take-off assembly according to claim 1, wherein said motor assembly (24) comprises a hydraulic machine (126), which mechanically connected to the second between said intermediate shaft (14) and said output shaft (8).

5. Power-take-off assembly according to any of the preceding claims, further comprising sensing means (40), which are configured to measure/detect the torque transmitted by said output shaft (10).

6. A method for controlling a power-take-off assembly (6, 106) realized according to any of the preceding claims, the method comprising the following steps:
i) measuring the torque transmitted by said output shaft (10) to the work implement connected to said power-take-off assembly (6);
ii) determining if the torque measured in step i) exceeds a first threshold;
iii) if the torque measured in step i) exceeds said first threshold, disengaging said clutch (16) and controlling said motor assembly (26) to increase the torque provided to said output shaft (10), in order to avoid interruption of the torque transmitted to said output shaft (10);
iv) controlling said selection element (20) to shift from one between said first gear (18) and said second gear (19) to the other one between said first gear (18) and said second gear (19), in order to increase the transmission ratio of said power-take-off transmission (12), and
v) engaging said clutch (16) and controlling said motor assembly (26) to decrease the torque provided to output shaft (10).

7. A method for controlling a power-take-off assembly (6, 106) realized according to any of claims from 1 to 5, the method comprising the following steps:
vi) measuring the torque transmitted by said output shaft (10) to the work implement connected to said power-take-off assembly (6);
vii) determining if the torque measured in step vi) falls below a second threshold;
viii) if the torque measured in step vi) falls below said second threshold, disengaging said clutch (16) and controlling said motor assembly (26) to increase the torque provided to said output shaft (10), in order to avoid interruption of the torque transmitted to said output shaft (10);
ix) controlling said selection element (20) to shift from one between said first gear (18) and said second gear (19) to the other one between said first gear (18) and said second gear (19), in order to decrease the transmission ratio of said power-take-off transmission (12), and
x) engaging said clutch (16) and controlling said motor assembly (26) to decrease the torque provided to output shaft (10).

8. A work vehicle (1) comprising:
• a powertrain assembly (2), which is carried by a work vehicle body and is configured to provide torque to allow motion of the work vehicle body with respect to the ground; and
• a power-take-off assembly (6, 106), which is carried by said powertrain assembly (2) and is realized according to any of the preceding claims.

9. Work vehicle according to claim 8, further comprising an electronic control unit (35), which is electronically connected to said powertrain assembly (6, 106), to said clutch (16) and to said selection element (20) and is provided with elaboration means configured to carry out the method according to claim 6 or 7.

10. Work vehicle according to claim 8 or 9, wherein said motor assembly (24) is separate and distinct from said powertrain assembly (2).

11. A computer-implemented software code comprising instructions which, when the program is executed by the electronic control unit (35) of the work vehicle (1) of claim 8 or 9, cause said electronic control unit (35) to carry out the method of claims 6 or 7.

12. A computer-readable means having stored thereon the software code of claim 11.
